# EUROPÄISCHE PATENTANMELDUNG

(11) **EP 4 198 429 A1**
(43) Veröffentlichungstag der Anmeldung: **21.06.2023**
(21) Anmeldenummer: 21214691.4
(22) Anmeldetag: 15.12.2021
(51) Int. Cl.: F26B 23/00, F28G 3/16

(54) **RÜCKGEWINNUNGSVORRICHTUNG**

(71) Anmelder: Kleine, Mathias, 58300 Wetter (DE)
(72) Erfinder: Kleine, Mathias, 58300 Wetter (DE)
(74) Vertreter: Kalkoff & Partner Patentanwälte mbB

(57) **Zusammenfassung**

Die Erfindung betrifft eine Rückgewinnungsvorrichtung und ein Rückgewinnungsverfahren zur Wärmerückgewinnung aus faserhaltiger Abluft, mit einem sich in einer Strömungsrichtung feuchter Abluft von einem Eintritt bis zu einem Austritt erstreckenden Gehäuse, wenigstens einem sich innerhalb des Gehäuses erstreckendem Rohrelement und einem Wärmeaustauschmedium zur Aufnahme von Wärme aus der feuchten Abluft. Um eine Vorrichtung sowie ein Verfahren bereitzustellen, die eine störungs- und ausfallarme Rückgewinnung von Energie aus der Abluft von industriellen Trocknungsanlagen mit einer langen, unterbrechungsfreien Betriebszeit ermöglichen, ist eine in Strömungsrichtung der feuchten Abluft vor dem Rohrelement angeordnete Reinigungseinheit zum Reinigen des Rohrelements vorgesehen.

## Beschreibung

Die Erfindung betrifft eine Rückgewinnungsvorrichtung sowie ein Rückgewinnungsverfahren für industrielle Trocknungsanlagen zur Wärmerückgewinnung aus faserhaltiger Abluft, insbesondere für Wäschereien.

Rückgewinnungsvorrichtungen und -verfahren sind allgemein in vielfältiger Ausgestaltung aus dem Stand der Technik bekannt und wurden auf experimenteller Basis bereits in gewerblichen Wäschereien verwendet, um Energie von faserhaltiger, feuchter und insbesondere mit Wasserdampf gesättigter Abluft, die z.B. beim Trocknen von Trocknungsgut, insbesondere Textilien, in industriellen Trocknungsanlagen entsteht, zurückzugewinnen.

Dies erfolgt bei den Vorrichtungen und Verfahren des Standes der Technik durch einen Wärmetauscher. Die feuchte Abluft wird durch den Wärmetauscher geleitet, in dem hierbei Kondensat anfällt. Beim Trocknen des Trocknungsgutes wird die Abluft mit Fasern angereichert, die sich in dem Wärmetauscher ablagern, wodurch es zu einer deutlichen Reduzierung des Wirkungsgrades der Wärmerückgewinnung und einer sinkenden Funktionsfähigkeit des Wärmetauschers sowie schließlich zu einem vollständigen Zusetzen des Wärmetauschers kommt.

Somit besteht bei diesen Vorrichtungen und zugehörigen Verfahren des Standes der Technik der Nachteil, dass ein dauerhafter und wartungsarmer oder sogar wartungsfreier Betrieb nicht möglich ist. Entsprechend kommt es zu hohen Wartungs- und Reparaturkosten sowie häufigen Betriebsausfällen des Wärmetauschers zum Beispiel im Bereich eines Abluftauslasses industrieller bzw. gewerblicher Trocknungsanlagen, wodurch es auch bei diesen Anlagen zu Störungen und Betriebsunterbrechungen kommt oder im schlimmsten Fall sogar ein Schaden an den der Rückgewinnungsvorrichtung vorgelagerten Trocknungsanlagen entsteht.

Der Erfindung liegt daher die Aufgabe zugrunde, eine Vorrichtung sowie ein Verfahren bereitzustellen, die eine störungs- und ausfallarme Rückgewinnung von Energie aus der Abluft von industriellen Trocknungsanlagen mit einer langen, unterbrechungsfreien Betriebszeit ermöglichen.

Die Aufgabe wird erfindungsgemäß durch eine Rückgewinnungsvorrichtung gemäß Anspruch 1 sowie ein Rückgewinnungsverfahren gemäß Anspruch 9 gelöst. Vorteilhafte Weiterbildungen der Erfindung sind in den abhängigen Ansprüchen angegeben.

Die erfindungsgemäße Rückgewinnungsvorrichtung zur Wärmerückgewinnung aus faserhaltiger Abluft weist ein sich in einer Strömungsrichtung feuchter Abluft von einem Eintritt bis zu einem Austritt erstreckendes Gehäuse, wenigstens ein sich innerhalb des Gehäuses bevorzugt parallel zu einer Längsachse des Gehäuses erstreckendes Rohrelement und ein Wärmeaustauschmedium zur Aufnahme von Wärme aus der feuchten Abluft sowie eine in Strömungsrichtung der feuchten Abluft vor dem Rohrelement angeordnete Reinigungseinheit zum Reinigen des Rohrelements auf.

Die Erfinder haben erkannt, dass die Anordnung einer Reinigungseinheit vor dem Rohrelement zahlreiche Vorteile hat und es insbesondere ermöglicht, die Energie der feuchten und warmen Abluft einer industriellen Trocknungsanlage für eine gewerbliche Wäscherei zurückzugewinnen, wobei Ablagerungen von Fasern in dem Rohrelement durch das zusätzliche Reinigen mittels der Reinigungseinheit deutlich reduziert werden. Das Risiko von Störungen und Ausfällen der Rückgewinnungsvorrichtung aufgrund von Faserablagerungen kann hierdurch stark reduziert werden, was unmittelbar zu einer längeren unterbrechungsfreien Betriebszeit, zu einer Kosteneinsparung und zu einem deutlich verringerten Wartungsaufwand führt.

Unter einer Rückgewinnungsvorrichtung wird grundsätzlich eine Baueinheit verstanden, die zur Rückgewinnung einer zugeführten Substanz und/oder einer zugeführten Ressource vorgesehen ist. Bevorzugt gewinnt die Rückgewinnungsvorrichtung wenigstens eine Substanz und/oder eine Ressource aus einem Gemisch verschiedener Substanzen und/oder Ressourcen zurück. Ein Beispiel für eine rückzugewinnende Substanz ist Wasser, insbesondere als Kondensat aus feuchter Abluft oder einem anderen feuchten Gas bzw. Gasgemisch. Bei der zurückgewonnenen Ressource kann es sich nur um Wärme oder aber auch zudem um eine andere Ressource handeln. Bevorzugt ist die Rückgewinnungsvorrichtung primär zur Wärmerückgewinnung vorgesehen und besonders bevorzugt findet zudem auch eine Rückgewinnung von Kondenswasser statt.

Grundsätzlich kann die Rückgewinnungsvorrichtung an einem beliebigen Ort und in beliebiger Entfernung zu der industriellen Trocknungsanlage angeordnet werden. Die Rückgewinnungsvorrichtung ist beispielsweise in einer z.B. durch eine Wand, eine Decke oder ein Dach eines Gebäudes gebildeten Gebrauchsebene anordbar. Hierzu kann das Gehäuse beispielsweise Stützelemente zur Arretierung des Gehäuses in der Gebrauchsebene aufweisen. Bevorzugt wird die Rückgewinnungsvorrichtung auf einem Dach und/oder unmittelbar im Bereich eines Auslasses der industriellen Trocknungsanlage angeordnet. Zum Transport und/oder zur Handhabung der Rückgewinnungsvorrichtung sind an dem Gehäuse beispielsweise Halteelemente vorgesehen.

Bei der industriellen Trocknungsanlage kann es sich grundsätzlich um eine beliebige Anlage zum Entfernen von Wasser, wässrigen Lösungen und/oder Reinigungsmitteln aus Gegenständen handeln, wobei die Trocknungsanlage bevorzugt zum Trocknen von Textilien und besonders bevorzugt zum Trocknen von Wäsche vorgesehen ist. Dabei ist die Trocknungsanlage besonders bevorzugt Teil einer Wäscherei und ganz besonders bevorzugt an einem oder mehreren Großwäschetrocknern angeordnet. Auch eine Verwendung im Zusammenhang mit einem Trocknergroßgerät, wie es beispielsweise in Hotels verwendet wird, ist denkbar. Dabei wird unter einer industriellen Trocknungsanlage eine Anlage verstanden, die im gewerblichen, professionellen und/oder industriellen Bereich zur Trocknung von feuchten Gegenständen, insbesondere von feuchten Textilien und/oder feuchter Wäsche, vorgesehen ist.

Die der Rückgewinnungsvorrichtung zugeführte Abluft weist erfindungsgemäß Fasern auf, wobei unter Fasern generell jegliche Partikel verstanden werden, die bei einer Behandlung von Textilien und Wäsche, insbesondere beim Waschen, Glätten und/oder Trocknen, entstehen bzw. vom Textil abgelöst werden können. Zudem kann die Abluft auch noch weitere Partikel, beispielsweise gemeinsam mit den Textilien zugeführte Fremdkörper und/oder Bestandteile eines Reinigungsmittels oder eines anderen Hilfsstoffes, aufweisen.

Das Gehäuse dient dazu, die feuchte Abluft von dem Eintritt bis zum Austritt zu leiten und/oder das Innere der Rückgewinnungsvorrichtung von der Umgebung abzuschirmen und/oder ein unkontrolliertes Austreten von zugeführter Abluft zu verhindern. Hierzu ist das Gehäuse bevorzugt rohrartig gebildet. Das Gehäuse weist bevorzugt einen sich entlang der Längsachse des Gehäuses zwischen dem Eintritt und dem Austritt erstreckendenden, polygonförmig, ellipsenförmig oder besonders bevorzugt kreisförmig gebildeten Querschnitt auf.

Das wenigstens eine Rohrelement ist in Strömungsrichtung der feuchten Abluft zwischen dem Eintritt und dem Austritt des Gehäuses angeordnet. Weiter weist das Rohrelement bevorzugt einen sich entlang einer Längsachse des Rohrelements erstreckenden polygonförmigen, ellipsenförmigen oder besonders bevorzugt kreisförmig gebildeten Querschnitt auf. Dabei beträgt der Druckmesser eines Rohrelements bevorzugt maximal 50%, besonders bevorzugt maximal 25%, ganz besonders bevorzugt maximal 15% und insbesondere bevorzugt maximal 10% eines Durchmessers des Gehäuses, insbesondere im Bereich des oder der Rohrelemente.

Die Rückgewinnungsvorrichtung ist bevorzugt derart gebildet, einen Volumenstrom von mindestens 1000 l/h durchleiten zu können. Generell ist die Rückgewinnungsvorrichtung bevorzugt derart gebildet und insbesondere dimensioniert, dass ein deutlicher Druckanstieg im Bereich des Eintritts gegenüber dem Umgebungsdruck vermieden wird, da industrielle Trocknungsanlagen typischerweise nicht ausgelegt sind, einen erhöhten Druck aufzubauen, sondern einen möglichst großen Volumenstrom erzeugen sollen, sodass ein Staudruck im Bereich der Rückgewinnungsvorrichtung den Betrieb der Trocknungsanlage stören würde. Entsprechend ist die Rückgewinnungsvorrichtung bevorzugt derart gebildet, um einen Volumenstrom von mindestens 7000 l/h, besonders bevorzugt von mindestens 8000 l/h und ganz besonders bevorzugt von 9000 l/h durchleiten zu können.

Die Längsachse des Rohrelements kann beispielsweise parallel zu oder in der Längsachse des Gehäuses angeordnet sein. Darüber hinaus ist das Rohrelement derart gebildet, dass die feuchte Abluft innerhalb des Rohrelements in Richtung des Austritts des Gehäuses strömt. Beispielsweise ist das Rohrelement dabei als Rohr mit einem gleichbleibenden Durchmesser gebildet. Vorzugsweise sind das Gehäuse und/oder das Rohrelement aus einem metallischen Werkstoff, insbesondere einem Stahl- oder einem Aluminiumwerkstoff, gebildet.

Das Wärmeaustauschmedium dient grundsätzlich der Aufnahme von Wärme aus der feuchten Abluft und/oder dem Ableiten der aufgenommenen Wärme aus der Rückgewinnungsanlage, insbesondere zu einem weiteren Wärmetauscher. Hierzu weist das Wärmeaustauschmedium bevorzugt wenigstens beim Zuführen zu der Rückgewinnungsvorrichtung eine geringere Temperatur als die feuchte Abluft auf, sodass die Wärme der feuchten Abluft aufgrund des Temperaturunterschieds auf das Wärmeaustauschmedium übergeht und/oder mittels Konvektion übertragen werden kann. Obwohl es grundsätzlich denkbar ist, der Rückgewinnungsvorrichtung durchgehend neues Wärmeaustauschmedium zuzuleiten, beispielsweise bei einer Verwendung zum unmittelbaren Anwärmen von Wasser, insbesondere von Wäschereiwasser, ist es bevorzugt, dass das Wärmeaustauschmedium in einem Kreislauf, insbesondere in einem geschlossenen Kreislauf, geführt wird.

Vorzugsweise ist die Rückgewinnungsvorrichtung und insbesondere das Gehäuse sowie das Rohrelement derart gebildet, dass das wenigstens eine Rohrelement und bevorzugt mehrere Rohrelemente zumindest teilweise, bevorzugt vollständig in Umfangsrichtung von dem Wärmeaustauschmedium umgeben und insbesondere umströmbar sind. Das Wärmeaustauschmedium ist beispielsweise als ein das Rohrelement umströmendes Fluid, beispielsweise aus reinem Wasser, einer wässrigen Lösung, als Wasser-Glykol-Gemisch oder als Sole, gebildet. Hierzu kann das Gehäuse einen Einlass und einen Auslass aufweisen, die bevorzugt das Gehäuse zur Außenseite der Rückgewinnungsvorrichtung durchdringend angeordnet sind.

Im Betrieb der Rückgewinnungsvorrichtung wird die feuchte Abluft über den Eintritt in das Gehäuse eingeleitet und strömt in Strömungsrichtung durch die Reinigungseinheit hindurch oder an der Reinigungseinheit vorbei, durch das Rohrelement und tritt über den Austritt aus dem Gehäuse aus. Die feuchte Abluft weist beispielsweise eine Restfeuchte von 30% bis 50% und eine Temperatur von 100°C bis 140°C auf. Ferner weist die feuchte Abluft aufgrund einem vorgeschalteten Trocknen von Trocknungsgut, beispielsweise von Kleidungsstücken, Fasern auf, wobei das Trocknen bevorzugt in einem industriellen Trockner erfolgt. Durch die Übertragung der Wärme von der feuchten Abluft auf das Wärmeaustauschmedium nimmt die Temperatur der Abluft ab und wenigstens ein Teil der Feuchtigkeit in der Abluft kondensiert innerhalb des Rohrelements. Hierbei fällt innerhalb des Rohrelements Kondensat an, das zumindest einen Anteil der Fasern von der Abluft trennt bzw. das zu einer Anhaftung der Fasern an dem Rohrelement führt. Das Kondensat kann mit dem Anteil der Fasern beispielsweise aktiv, z.B. mittels einer Fördereinheit, oder passiv, z.B. mittels eines Gefälles, aus dem Gehäuse abgeleitet werden. Das abgeleitete Kondensat mit den Fasern kann z.B. mittels einer in und/oder unterhalb der Gebrauchsebene der Rückgewinnungsvorrichtung angeordneten Aufnahmeeinheit, z.B. einer Dachrinne oder einem Abfluss, abgeleitet oder rückgewonnen und abermals in das Gebäude geleitet und wiederverwendet werden.

Mit einem fortschreitenden Trocknungsprozess der Abluft lagern sich bereits trockene Fasern innerhalb des Rohrelements ab und/oder die Menge des Kondensats reicht nicht mehr aus, die angelagerten Fasern vollständig von dem Rohrelement zu entfernen. Die Reinigungseinheit ist derart gebildet, die vorzugsweise bereits trockenen, innerhalb des Rohrelements abgelagerten Fasern zu entfernen. Die Reinigungseinheit ist dazu bevorzugt in Strömungsrichtung der feuchten Abluft zwischen dem Eintritt des Gehäuses und dem Rohrelement innerhalb des Gehäuses angeordnet. Ferner kann die Reinigungseinheit derart gebildet sein, ein fluides Medium, beispielsweise Druckluft oder Wasser, in das Gehäuse abzugeben. Ferner kann das Gehäuse eine Wartungsöffnung aufweisen. Diese ist bevorzugt im Bereich der Reinigungseinheit angeordnet, wodurch die Reinigungseinheit im äußerst seltenen Fall einer Störungs- oder Wartung schnell und einfach zugänglich ist.

Die Reinigungseinheit weist bevorzugt eine Auslassöffnung zur Abgabe eines fluiden Mediums, insbesondere Druckluft oder Wasser, auf. Die Auslassöffnung kann generell feststehend angeordnet sein und ist bevorzugt in Strömungsrichtung der feuchten Abluft ausgerichtet. Gemäß einer vorteilhaften Weiterbildung der Erfindung ist jedoch vorgesehen, dass die Reinigungseinheit mindestens eine um die Längsachse des Gehäuses rotierbare Auslassöffnung zur Abgabe eines fluiden Mediums, insbesondere Druckluft oder Wasser, aufweist, wodurch das wenigstens eine Rohrelement besonders zuverlässig gereinigt werden kann. Unter der Auslassöffnung wird grundsätzlich eine Öffnung der Reinigungseinheit verstanden, über die das fluide Medium abgebbar ist. Die Auslassöffnung kann derart gebildet sein, dass das fluide Medium in die feuchte, faserhaltige Abluft eingesprüht wird. Ferner kann die Auslassöffnung einen nach Außen zunehmenden Durchmesser aufweisen und/oder kegelförmig gebildet sein. Zusätzlich ist die Auslassöffnung besonders bevorzugt als eine Düse gebildet, sodass das fluide Medium unter Druck, insbesondere einem Druck von 1 bis 8 bar, bevorzugt 2-6 bar, besonders bevorzugt 2-5 bar in die feuchte, faserhaltige Abluft abgegeben und/oder auf das oder die Rohrelemente gerichtet wird. Unter einer Rotation der Auslassöffnung um die Längsachse des Gehäuses wird insbesondere eine Bewegung entlang einer Bewegungsbahn mit konstantem Abstand zur Längsachse des Gehäuses und/oder entlang einer kreisförmigen Bahn mit der Längsachse im Mittelpunkt verstanden. Bevorzugt verläuft die Bewegungsbahn innerhalb einer senkrecht zur Längsachse des Gehäuses angeordneten Bewegungsebene. Die Bewegungsbahn kann grundsätzlich jedoch beliebig, beispielsweise auch elliptisch, gebildet sein.

Besonders bevorzugt ist vorgesehen, dass die Reinigungseinheit wenigstens zwei, jeweils an einem Auslasselement angeordnete Auslassöffnungen aufweist. Die Auslasselemente sind grundsätzlich für die Anordnung und/oder Ausrichtung der Auslassöffnungen und/oder ein Zuleiten des fluiden Mediums an die Auslassöffnungen gebildet. Dabei weist jedes Auslasselement bevorzugt wenigstens eine Auslassöffnung und besonders bevorzugt genau eine Auslassöffnung auf, die ganz besonders bevorzugt im Bereich eines Endes des Auslasselements angeordnet ist. Alternativ kann das Auslasselement auch mehrere Auslassöffnungen aufweisen, die dann besonders bevorzugt in gleichem Abstand zueinander angeordnet sind. Die Auslasselemente sind bevorzugt rohrartig und/oder unverzweigt gebildet. Besonders bevorzugt weisen die Auslasselemente wenigstens eine Krümmung auf. Ferner können die Auslasselemente einstückig miteinander verbunden sein. Ebenfalls bevorzugt sind die Auslasselemente aller Auslassöffnungen zueinander identisch gebildet und/oder rotationssymmetisch angeordnet.

Zur Rotation der Auslassöffnung um die Längsachse des Gehäuses kann die Reinigungseinheit eine aktive Antriebseinheit, wie beispielsweise einen Elektromotor, aufweisen. Bevorzugt ist jedoch vorgesehen, dass die Auslasselemente derart gebildet und/oder die Auslassöffnung oder -öffnungen derart ausgerichtet sind, dass die Auslassöffnung oder - öffnungen antriebslos, insbesondere durch den Druck des austretenden fluiden Mediums, um die Längsachse des Gehäuses rotiert werden. Hierzu sind die Auslassöffnungen bevorzugt in Richtung auf die Bewegungsbahn an den Auslasselementen gewinkelt angeordnet.

Gemäß einer vorteilhaften Ausgestaltung der Erfindung ist vorgesehen, dass die Auslasselemente an einem parallel zur Längsachse oder bevorzugt in der Längsachse des Gehäuses angeordneten Verbindungselement der Reinigungseinheit angeordnet sind, wobei die Auslasselemente und/oder das Verbindungselement um die Längsachse des Gehäuses rotierbar gelagert sind. Das Verbindungselement dient der Leitung des fluiden Mediums zu dem oder den Auslasselementen. Darüber hinaus weist das Verbindungselement bevorzugt eine zylindrische Form und/oder einen runden Querschnitt auf. Das Zuführen des fluiden Mediums zu der Rückgewinnungsvorrichtung erfolgt bevorzugt über ein Leitungselement, das an dem Verbindungselement angeordnet ist und beispielsweise mit einer außerhalb und/oder an dem Gehäuse und/oder innerhalb des Gebäudes, an dem die Rückgewinnungsvorrichtung angeordnet ist, angeordneten Pumpeinheit verbunden sein kann. Ferner ist das Leitungselement bevorzugt abgedichtet, beispielsweise mittels eines Dichtungselements oder einer Schweißnaht, an dem Gehäuse angeordnet. Besonders bevorzugt weist das Verbindungselement und/oder das Leitungselement Lagerelemente, beispielsweise Gleit- oder Wälzlager zur rotierbaren Lagerung der Auslasselemente und/oder des Verbindungselements auf.

Nach einer vorteilhaften Weiterbildung der Erfindung ist vorgesehen, dass zahlreiche, einen Rohrbündelwärmetauscher bildende Rohrelemente parallel zueinander innerhalb des Gehäuses angeordnet sind, wobei jedes der Rohrelemente an einem Ende eine Eintrittsöffnung zum Zuführen feuchter Abluft und bevorzugt eine Austrittsöffnung zur Abgabe der Abluft aufweist. Bevorzugt weist die Rückgewinnungsvorrichtung mehrere Rohrelemente und besonders bevorzugt mehrere zueinander identische Rohrelemente auf. Weiterhin bevorzugt sind alle Rohrelemente parallel zueinander angeordnet. Ebenfalls bevorzugt sind alle Eintrittsöffnungen und/oder alle Austrittsöffnungen der Rohrelemente jeweils in einer gemeinsamen Ebene und/oder in einem gleichen Abstand zum Eintritt und/oder zum Austritt des Gehäuses angeordnet. Ebenfalls bevorzugt beträgt dabei die Querschnittsfläche aller Rohrelemente wenigstens 25%, besonders bevorzugt wenigstens 50% und ganz besonders bevorzugt wenigstens 75% der Querschnittsfläche des Gehäuses, sodass eine gute Durchleitung der Abluft durch die Rohrelemente ermöglicht und/oder ein unerwünschter Druckaufbau innerhalb der Rückgewinnungsvorrichtung vermieden wird. Der Rohrbündelwärmetauscher weist in Richtung der Längsachse des Gehäuses bevorzugt eine Länge von mindestens 50 %, besonders bevorzugt mindestens 60 %, ganz besonders bevorzugt mindestens 70% bezogen auf die Länge des Gehäuses auf. Das Gehäuse weist im Bereich des Rohrbündelwärmetauschers bevorzugt einen größeren Durchmesser als am Eintritt auf, sodass der Durchmesser des Gehäuses im Bereich der Reinigungseinheit besonders bevorzugt stetig zunimmt.

Das oder die Rohrelemente erstrecken sich besonders bevorzugt zwischen zwei innerhalb des Gehäuses angeordneten Abdichtelementen zum Trennen der feuchten Abluft von dem Wärmeaustauschmedium. Die Eintrittsöffnungen und/oder die Austrittsöffnungen des oder der Rohrelemente sind bevorzugt an den Abdichtelementen angeordnet. Besonders bevorzugt sind das oder die Rohrelemente jeweils mit dem Abdichtelement verbunden, beispielsweise verschweißt. Die Abdichtelemente sind bevorzugt plattenförmig gebildet. Ebenfalls bevorzugt sind die Abdichtelemente senkrecht zu der Längsachse des Gehäuses angeordnet. Besonders bevorzugt ist der Durchmesser der Abdichtelemente derart an das Gehäuse, insbesondere einen Innendurchmesser des Gehäuses angepasst, dass die Abdichtelemente bei der Herstellung der Rückgewinnungsvorrichtung mit den bevorzugt zwischen den Abdichtelementen angeordneten Rohrelementen in das Gehäuse einschiebbar sind. Zur Abdichtung der Abdichtelemente gegenüber dem Gehäuse sind diese beispielsweise mit dem Gehäuse verschweißt. Die Abdichtelemente sind ebenfalls bevorzugt aus einem metallischen Werkstoff gebildet. Der Einlass und der Auslass des Gehäuses sind jeweils derart im Bereich eines der Abdichtelemente angeordnet, dass bevorzugt alle Rohrelemente von dem zwischen den Abdichtelementen besonders bevorzugt die Strömungsrichtung der feuchten Abluft kreuzenden Wärmeaustauschmedium umströmt werden. Da die feuchte Abluft durch die Rohrelemente strömt und das Wärmeaustauschmedium an den Rohrelementen vorbeiströmt, befinden sich die feuchte Abluft und das Wärmeaustauschmedium nicht in Kontakt.

Gemäß einer vorteilhaften Ausgestaltung der Erfindung ist vorgesehen, dass die wenigstens eine Auslassöffnung der Reinigungseinheit derart ausgerichtet und/oder derart bewegbar ist, dass das fluide Medium auf einen Bereich der Eintrittsöffnungen der Rohrelemente gerichtet strömt und wenigstens auf einen Anteil von 40 %, bevorzugt 60 % und besonders bevorzugt 80 % bezogen auf eine Gesamtfläche aller Eintrittsöffnungen trifft. Die Auslassöffnung ist bevorzugt derart ausgerichtet, dass das fluide Medium in der Strömungsrichtung der feuchten, faserhaltigen Abluft, beispielsweise parallel und/oder in einem Winkel kleiner als 90°, besonders bevorzugt kleiner als 45° und ganz besonders bevorzugt kleiner als 15° zur Längsachse des Gehäuses abgegeben wird. Durch diese vorteilhafte Ausgestaltung der Erfindung wird eine besonders zuverlässige Reinigung mehrerer Rohrelemente eines Rohrbündelwärmetauschers ermöglicht, wodurch das Risiko von Ausfällen oder Störungen der Rückgewinnungsvorrichtung selbst bei einem erhöhten Durchsatz signifikant reduziert wird.

Gemäß einer besonders vorteilhaften Weiterbildung der Erfindung ist vorgesehen, dass die Rückgewinnungsvorrichtung eine mit wenigstens einem Sensorelement verbundene Steuereinheit, insbesondere wenigstens zur Steuerung der Reinigungseinheit, aufweist. Die Steuereinheit ist vorzugsweise als programmierbare Einheit, z.B. als Computer, als SPS oder in Form einer externen und/oder übergeordneten Steuerung, gebildet. Bevorzugt weist die Rückgewinnungsvorrichtung wenigstens ein, besonders bevorzugt mehrere Sensorelemente zur Erfassung von Sensorsignalen, wie beispielsweise der Temperatur und/oder des Drucks und/oder des Feuchtegehalts der feuchten Abluft auf. Das oder die Sensorelemente stehen mit der Steuereinheit zur Weiterleitung der erfassten Daten in Verbindung. Die Sensorelemente sind beispielsweise vor und/oder nach dem Rohrelement oder den Rohrelementen oder zusätzlich bevorzugt im Bereich des Rohrelements oder der Rohrelemente an dem Gehäuse angeordnet. Die Steuereinheit steht bevorzugt wenigstens mit einem Steuermittel zum Aktivieren und Deaktivieren der Reinigungseinheit in Verbindung. Bevorzugt ist die Steuereinheit derart gebildet, dass sie in Abhängigkeit von Sensorsignalen ein vorgebbares Programm ausführt. Das vorgebbare Programm weist bevorzugt Einstellungsmöglichkeiten für einen nachstehend beschriebenen vorgebbaren Grenzwert auf. Ferner ist die Steuereinheit zur Weitergabe der erfassten Daten an einen besonders bevorzugt im Abstand zu der Rückgewinnungsvorrichtung angeordneten Empfänger gebildet.

Das erfindungsgemäße Rückgewinnungsverfahren für industrielle Trocknungsanlagen zur Wärmerückgewinnung aus faserhaltiger Abluft kann insbesondere mit der vorstehend beschriebenen Rückgewinnungsvorrichtung durchgeführt werden und umfasst als Verfahrensschritte ein Zuführen feuchter, mit Fasern verunreinigter Abluft über den Eintritt zu dem oder mehreren Rohrelementen der Rückgewinnungsvorrichtung, einen Wärmeaustausch zwischen der feuchten Abluft und dem das und/oder die Rohrelemente temperierenden und/oder umströmenden Wärmeaustauschmedium und wenigstens zeitweises Reinigen des Rohrelements und/oder der Rohrelemente mittels einer Reinigungseinheit der Rückgewinnungsvorrichtung zum Entfernen von angelagerten Fasern und/oder zum Freihalten des oder der Rohrelemente. Bevorzugt wird die trockene und wenigstens teilweise von Fasern getrennte Abluft über den Austritt des Gehäuses, z.B. an die Umgebung, abgeführt.

Das Reinigen des und/oder der Rohrelemente kann grundsätzlich in beliebiger Weise und zu einem beliebigen Zeitpunkt sowie über eine beliebige Dauer erfolgen. Bevorzugt wird das Reinigen jedoch periodisch und/oder in Abhängigkeit eines vorgebbaren Grenzwerts und/oder für eine festgelegte Dauer und/oder nach einem bzw. für ein festgelegtes Zeitintervall gesteuert. Besonders bevorzugt wird als vorgebbarer Grenzwert ein Feuchtegehalt und/oder eine Temperatur der Abluft eingestellt. Der Feuchtegehalt und die Temperatur der Abluft werden bevorzugt mittels der vorstehend beschriebenen Sensorelemente erfasst und besonders bevorzugt kontinuierlich überwacht. Für den Feuchtegehalt und die Temperatur der Abluft können ein und/oder zwei verschiedene vorgebbare Grenzwerte vorgesehen sein. Die Reinigungseinheit wird beispielsweise beim Unterschreiten eines ersten Grenzwerts des Feuchtegehalts der Abluft und/oder beim Überschreiten eines zweiten Grenzwerts der Temperatur der Abluft aktiviert, da bei einem Textiltrocknungsvorgang eine Selbstreinigung aufgrund des auskondensierenden Wassers ab einer Unterschreitung eines Feuchtegehalts nicht mehr gegeben ist. Auch kann eine Endphase eines Trocknungsvorgangs an der steigenden Temperatur erkannt werden, sodass dies ein guter Zeitpunkt für ein Reinigen vor einer erneuten Verwendung der Rückgewinnungsvorrichtung darstellt.

Besonders bevorzugt ist vorgesehen, dass zunächst eine Wärmerückgewinnung aus der feuchten Abluft ohne ein Reinigen des oder der Rohrelemente erfolgt und mit einem fortschreitenden Trocknungsprozess und damit verbunden sinkendem Feuchtegehalt der Abluft das Reinigen zugeschaltet wird, um bereits trockene Fasern aus dem oder den Rohrelementen mittels eines fluiden, das jeweilige Rohrelemente durchströmenden Mediums zu entfernen.

Ein Ausführungsbeispiel der erfindungsgemäßen Rückgewinnungsvorrichtung sowie des erfindungsgemäßen Rückgewinnungsverfahrens wird nachstehend mit Bezug auf die Zeichnungen näher erläutert. In den Figuren zeigen:
Fig.1 eine schematische Ansicht einer Rückgewinnungsvorrichtung;
Fig. 2a einen schematischen Längsschnitt entlang der Linie A-A der in Fig. 1 dargestellten Rückgewinnungsvorrichtung und
Fig. 3a eine schematische Schnittansicht entlang der Linie B-B der in Fig. 1 und 2a dargestellten Rückgewinnungsvorrichtung.

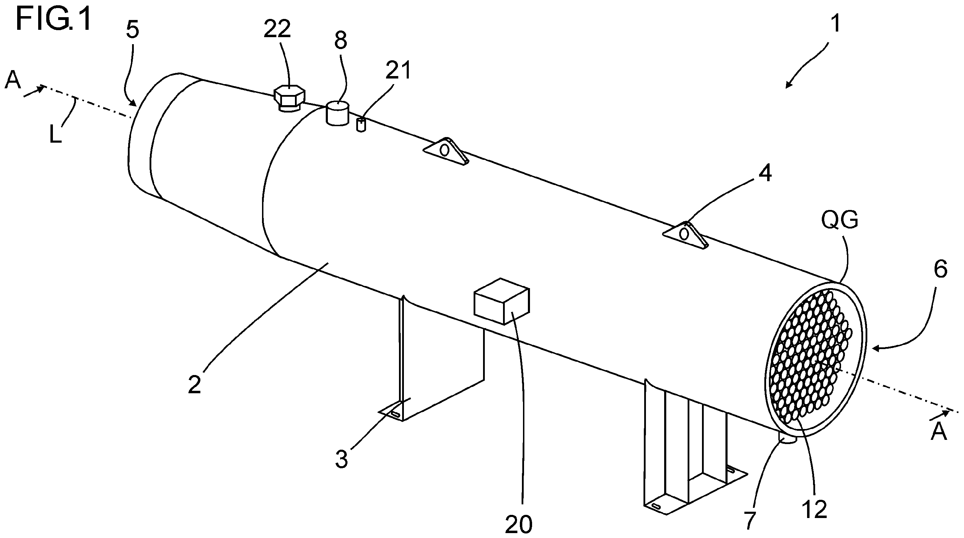

In Fig. 1 ist eine beispielhafte Ausführungsform einer Rückgewinnungsvorrichtung 1 mit einem Gehäuse 2 dargestellt. Das Gehäuse 2 weist zwei Stützelemente 3 zur Arretierung des Gehäuses 2 auf einem Dach und zwei Halteelemente 4 zum Transport des Gehäuses 2 auf. Ferner weist das Gehäuse 2 einen Eintritt 5 für die Zuführung faserhaltiger, feuchter Abluft und einen Austritt 6 für die Abführung der Abluft auf. Weiter weist das Gehäuse 2 einen sich entlang einer Längsachse L des Gehäuses 2 zwischen dem Eintritt 5 und dem Austritt 6 erstreckenden kreisförmigen Querschnitt QG mit einem Durchmesser DG auf.

An dem Gehäuse 2 sind ein Einlass 7 und ein Auslass 8 für die Durchführung eines Wärmeaustauschmediums in Form eines Wasser-Glykol-Gemischs angeordnet.

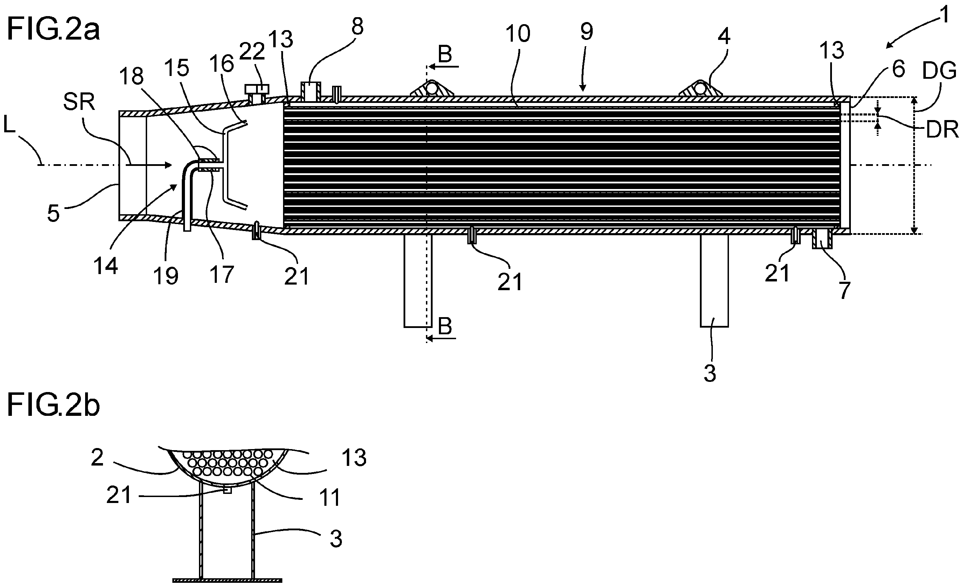

Innerhalb des Gehäuses 2 sind, wie in Fig. 2a dargestellt, mehrere einen Rohrbündelwärmetauscher 9 bildende Rohrelemente 10 parallel zueinander angeordnet. Die Rohrelemente 10 sind zueinander identisch und jeweils als Rohr mit einem gleichbleibenden Durchmesser DR gebildet. Jedes Rohrelement 10 weist eine Eintrittsöffnung 11 und eine Austrittsöffnung 12 auf. Die Rohrelemente 10 sind zwischen zwei entlang der Längsachse L des Gehäuses beabstandet zueinander angeordneten Abdichtelementen 13 angeordnet. Die Eintrittsöffnungen 11 und die Austrittsöffnungen 12 sind jeweils in einer gemeinsamen durch die Abdichtelemente 13 gebildeten Ebene an den Abdichtelementen 13 angeordnet. Weiter sind die Eintrittsöffnungen 11 und die Austrittsöffnungen 12 jeweils in einem gleichen Abstand zu dem Eintritt 5 und dem Austritt 6 angeordnet. Die Abdichtelemente 13 trennen das Wärmeaustauschmedium von der faserhaltigen, feuchten Abluft. Das Gehäuse 2, die Abdichtelemente 13 und die Rohrelemente 10 sind aus einem Stahlwerkstoff gebildet.

Innerhalb des Gehäuses 2 ist vor den Rohrelementen 10 eine Reinigungseinheit 14 mit zwei jeweils an einem Auslasselement 15 angeordneten Auslassöffnungen 16 angeordnet. Die Auslasselemente 15 sind einstückig miteinander verbunden und an einem Verbindungselement 17 in Lagerelementen 18 um die Längsachse L des Gehäuses 2 rotierbar gelagert. Über ein mit dem Verbindungselement 17 verbundenes Leitungselement 19 wird ein fluides Medium in Form von Druckluft an die Auslasselemente 15 und die Auslassöffnungen 16 geleitet. Ferner ist an dem Gehäuse 2 im Bereich der Reinigungseinheit 14 eine Wartungsöffnung 22 angeordnet.

In einer nicht dargestellten, alternativen Ausführungsform kann die Reinigungseinheit 14 mehrere entlang den Auslasselementen 15 beabstandet zueinander angeordnete Auslassöffnungen 16 aufweisen.

Ferner weist die Rückgewinnungsvorrichtung 1 gemäß Fig. 1 eine Steuereinheit 20 und mehrere mit der Steuereinheit 20 verbundene Sensorelemente 21 z.B. zur Erfassung eines Feuchtigkeitsgehalts und einer Temperatur der Abluft auf. Die Sensorelemente 21 sind an dem Gehäuse 2 angeordnet (siehe Fig.2a).

Mit der Rückgewinnungsvorrichtung 1 kann ein Rückgewinnungsverfahren durchgeführt werden. Die Rückgewinnungsvorrichtung 1 ist beispielsweise an eine industrielle Trocknungsanlage zur Trocknung von feuchten Textilien und Wäsche angeschlossen. Hierzu ist die Rückgewinnungsvorrichtung 1 zur Durchleitung eines Volumenstroms von 9000 l/h ausgelegt. Die von der Trocknungsanlage abgegebene faserhaltige, feuchte Abluft wird der Rückgewinnungsvorrichtungl über den Eintritt 5 des Gehäuses 2 zugeführt. Die faserhaltige, feuchte Abluft strömt in Strömungsrichtung SR vom Eintritt 5 an der Reinigungseinheit 14 vorbei und jeweils über die Eintrittsöffnungen 11 in die Rohrelemente 10. Die Rohrelemente 10 werden kontinuierlich von dem über den Einlass 7 zu dem Auslass 8 strömenden Wärmeaustauschmedium umströmt. Im Rohrbündelwärmetauscher 9 findet ein Wärmeaustausch zwischen der faserhaltigen, feuchten Abluft und dem Wärmeaustauschmedium statt. Dieses weist eine geringere Temperatur als die faserhaltige, feuchte Abluft auf, sodass ein in Richtung des Wärmeaustauschmediums ausgerichteter Temperaturgradient vorliegt. Durch den Wärmeaustausch sinkt die Temperatur der faserhaltigen, feuchten Abluft und es fällt innerhalb der Rohrelemente 10 Kondensat an. Mittels des Kondensats wird ein Anteil von in der Abluft enthaltenen Fasern aus dem Gehäuse 2 abgeleitet, indem das Kondensat mit den Fasern aus dem Austritt 6 des Gehäuses 2 fließt. Die trockene und größtenteils von den Fasern befreite Abluft wird aus dem Austritt 6 des Gehäuses 2 an die Umgebung abgegeben.

Die Sensorelemente 21 erfassen kontinuierlich die Temperatur und den Feuchtigkeitsgehalt der feuchten Abluft und senden die erfassten Daten an die Steuereinheit 20. Mit fortschreitendem Trocknungsprozess sinkt der Feuchtegehalt der Abluft. Bei Unterschreiten eines mit der Steuereinheit 20 vorgebbaren Grenzwerts des Feuchtigkeitsgehalts wird die Reinigungseinheit 14 mittels der Steuereinheit 20 eingeschaltet. Die Auslasselemente 15 rotieren durch die aus den Auslassöffnungen 16 strömende Druckluft um die Längsachse L des Gehäuses 2. Die Auslassöffnungen 16 sind in Richtung der Eintrittsöffnungen 11 der Rohrelemente 10 ausgerichtet, sodass die Druckluft in Verbindung mit der Rotation der Auslasselemente 15 in alle Rohrelemente 10 eingeleitet wird. Die Druckluft durchströmt die Rohrelemente 10 und entfernt bereits trockene in den Rohrelementen 10 abgelagerte Fasern. Darüber hinaus fördert die Druckluft den Transport des Kondensats mit den Fasern in Richtung des Austritts 6 des Gehäuses 2.

Die Rückgewinnungsvorrichtung 1 ermöglicht die Rückgewinnung der Energie der feuchten und warmen Abluft aus der industriellen Trocknungsanlage für eine gewerbliche Wäscherei. Durch die Rückgewinnung der Wärme der Abluft und ggf. die Wiederverwendung des Kondensats in der Wäscherei können beispielsweise bis zu ca. 120 kW/h an Energie zurückgewonnen werden. Durch die Anordnung der Reinigungseinheit 1 vor dem Rohrbündelwärmetauscher 9 und die damit einhergehende Entfernung von in den Rohrelementen 10 abgelagerten Fasern kann das Risiko von Störungen und Ausfällen der Rückgewinnungsvorrichtung 1 stark reduziert werden.

### Bezugszeichenliste

- 1: Rückgewinnungsvorrichtung
- 2: Gehäuse
- 3: Stützelement
- 4: Halteelement
- 5: Eintritt
- 6: Austritt
- 7: Einlass
- 8: Auslass
- 9: Rohrbündelwärmetauscher
- 10: Rohrelemente
- 11: Eintrittsöffnung
- 12: Austrittsöffnung
- 13: Abdichtelement
- 14: Reinigungseinheit
- 15: Auslasselement
- 16: Auslassöffnungen
- 17: Verbindungselement
- 18: Lagerelement
- 19: Leitungselement
- 20: Steuereinheit
- 21: Sensorelement
- 22: Wartungsöffnung
- L: Längsachse des Gehäuses
- DG: Durchmesser des Gehäuses
- DR: Durchmesser des Rohrelements
- QG: Querschnitt des Gehäuses
- SR: Strömungsrichtung der Abluft

## Patentansprüche

1. Rückgewinnungsvorrichtung für industrielle Trocknungsanlagen zur Wärmerückgewinnung aus faserhaltiger Abluft, mit
- einem sich in einer Strömungsrichtung (SR) feuchter Abluft von einem Eintritt (5) bis zu einem Austritt (6) erstreckenden Gehäuse (2),
- wenigstens einem sich innerhalb des Gehäuses (2) erstreckendem Rohrelement (10) und
- einem Wärmeaustauschmedium zur Aufnahme von Wärme aus der feuchten Abluft,
**gekennzeichnet durch** eine in Strömungsrichtung (SR) der feuchten Abluft vor dem Rohrelement (10) angeordnete Reinigungseinheit (14) zum Reinigen des Rohrelements.

2. Rückgewinnungsvorrichtung nach Anspruch 1, **dadurch gekennzeichnet, dass** die Reinigungseinheit (14) mindestens eine um eine Längsachse (L) des Gehäuses (2) rotierbare Auslassöffnung (16) zur Abgabe eines fluiden Mediums aufweist.

3. Rückgewinnungsvorrichtung nach einem der Ansprüche 1 oder 2, **dadurch gekennzeichnet, dass** die Reinigungseinheit (14) wenigstens zwei, jeweils an einem Auslasselement (15) angeordnete Auslassöffnungen (16) aufweist.

4. Rückgewinnungsvorrichtung nach wenigstens einem der vorherigen Ansprüche, **dadurch gekennzeichnet, dass** die Auslasselemente (15) an einem parallel zur Längsachse (L) oder in der Längsachse (L) des Gehäuses (2) angeordneten Verbindungselement (17) der Reinigungseinheit (14) angeordnet sind, wobei die Auslasselemente (15) und/oder das Verbindungselement (17) um die Längsachse (L) des Gehäuses (2) rotierbar gelagert sind.

5. Rückgewinnungsvorrichtung nach wenigstens einem der vorherigen Ansprüche, **dadurch gekennzeichnet, dass** zahlreiche, einen Rohrbündelwärmetauscher (9) bildende Rohrelemente (10) parallel zueinander innerhalb des Gehäuses (2) angeordnet sind, wobei jedes der Rohrelemente (10) an einem Ende eine Eintrittsöffnung (11) zum Zuführen feuchter Abluft aufweist.

6. Rückgewinnungsvorrichtung nach wenigstens einem der vorhergehenden Ansprüche, **dadurch gekennzeichnet, dass** die wenigstens eine Auslassöffnung (16) derart ausgerichtet ist und/oder derart bewegbar ist, dass das fluide Medium auf einen Bereich der Eintrittsöffnungen (11) der Rohrelemente (10) gerichtet ist und wenigstens auf einen Anteil von 40 %, bevorzugt 60 % und besonders bevorzugt 80 % bezogen auf eine Gesamtfläche aller Eintrittsöffnungen (11) trifft.

7. Rückgewinnungsvorrichtung nach wenigstens einem der vorhergehenden Ansprüche, **dadurch gekennzeichnet, dass** sich die Rohrelemente (10) zwischen zwei innerhalb des Gehäuses (2) angeordneten Abdichtelementen (13) zum Trennen der feuchten Abluft von dem Wärmeaustauschmedium erstrecken.

8. Rückgewinnungsvorrichtung nach wenigstens einem der vorhergehenden Ansprüche, **gekennzeichnet durch** eine mit wenigstens einem Sensorelement (21) verbundene Steuereinheit (20) wenigstens zur Steuerung der Reinigungseinheit (14).

9. Rückgewinnungsverfahren für industrielle Trocknungsanlagen zur Wärmerückgewinnung aus faserhaltiger Abluft mittels einer Rückgewinnungsvorrichtung, insbesondere nach wenigstens einem der Ansprüche 1 bis 8, mit den Schritten
- Zuführen feuchter, mit Fasern verunreinigter Abluft über einen Eintritt (5) zu einem oder mehreren Rohrelementen (10) der Rückgewinnungsvorrichtung (1),
- Wärmeaustausch zwischen der feuchten Abluft und einem das oder die Rohrelemente (10) temperierenden und/oder umströmenden Wärmeaustauschmedium und
- wenigstens zeitweises Reinigen des Rohrelements (10) oder der Rohrelemente (10) mittels einer Reinigungseinheit (14) der Rückgewinnungsvorrichtung (1) zum Entfernen von angelagerten Fasern und/oder zum Freihalten des oder der Rohrelemente (10).

10. Rückgewinnungsverfahren nach Anspruch 9, **dadurch gekennzeichnet, dass** das Reinigen des oder der Rohrelemente (10) periodisch und/oder in Abhängigkeit eines vorgebbaren Grenzwerts gesteuert wird.

11. Rückgewinnungsverfahren nach Anspruch 9 oder 10, **dadurch gekennzeichnet, dass** als vorgebbarer Grenzwert ein Feuchtegehalt und/oder eine Temperatur der Abluft eingestellt wird.

12. Rückgewinnungsverfahren nach wenigstens einem der Ansprüche 9 - 11, **dadurch gekennzeichnet, dass** zunächst eine Wärmerückgewinnung aus der feuchten Abluft ohne ein Reinigen des oder der Rohrelemente (10) erfolgt und mit einem fortschreitenden Trocknungsprozess und damit verbunden sinkendem Feuchtegehalt der Abluft das Reinigen zugeschaltet wird, um bereits trockene Fasern aus dem oder den Rohrelementen (10) mittels eines fluiden, das jeweilige Rohrelemente (10) durchströmenden Mediums zu entfernen.
